# EUROPEAN PATENT SPECIFICATION

(11) **EP 2 884 200 B1**
(45) Date of publication and mention of the grant of the patent: **03.05.2017**
(21) Application number: 14460100.2
(22) Date of filing: 11.12.2014
(51) Int. Cl.: F24H 1/32, F24H 1/40, F24H 1/44, F24H 8/00, F24H 7/00, F24H 9/00, F24B 1/183

(54) **Central heating boiler**
Zentralheizungskessel
Chaudière de chauffage central

(30) Priority: 13.12.2013 PL 40650213
(43) Date of publication of application: 17.06.2015
(73) Proprietor: EKO-WERY Teresa Strzelczyk, 82-500 Kwidzyn (PL)
(72) Inventor: Strzelczyk, Marian, 82-500 Kwidzyn (PL)
(74) Representative: Czabajski, Jacek

(56) References cited:
- DE-A1- 3 239 267
- FR-A1- 2 456 912
- GB-A- 2 052 045
- US-A- 4 418 649

## Description

The invention relates to a central heating boiler, intended to use the heat produced from the combustion of solid fuels for heating a heating medium in central heating systems.

A number of detailed solutions of the structure of heating boilers using solid fuels as a heating medium is known. The term solid fuels is understood in this patent specification as such fuels as hard coal, lignite, eco-pea coal, fine coal, pellets, briquettes and other types of solid fuels. Central heating boilers typically comprise a casing where side walls and/or a boiler cover contains liquid flow chambers or channels, constituting a working heating medium.

The solution known from Polish patent specification No. PL 215763 discloses a central heating water boiler comprising a body in the form of a water jacket arranged in a casing, where there is insulation between the water jacket and the casing. A solid fuel charging chamber is closed from the top with a door and contains in the bottom part a grate over an ash pit. In this know solution, the charging chamber is connected in the bottom part with a secondary combustion chamber and with flue gas reversing chambers. Between the upper flue gas reversing chamber, and the bottom flue gas reversing chamber and between the bottom flue gas reversing chamber and a flue chamber, the boiler contains smoke tubes.

Another solution known from Polish patent specification No. P.382992 discloses a different central heating water boiler. According to this solution, the boiler contains a water jacket and water tubes, lined with a layer of refractory concrete inside, and mineral wool and a sheet metal casing outside. The boiler has a biomass container loosely inserted into the boiler through the main door, constituting one of the side walls of the boiler.

Next solution known from Polish patent application No. P.307031 discloses a central heating boiler comprising a vertical gas after-combustion chamber equipped with secondary air nozzles. The gas after-combustion chamber is comprised of appropriately shaped ceramic members. The control and distribution of primary and secondary air is provided by a fan installed in the upper rear section of the boiler body. A charging chamber contains an upper and bottom primary air inlet control. Flue gas flow in a furnace chamber here is from the bottom to the top.

Other solution known from European patent application No. EP 0025769 discloses a boiler intended for hot water heating systems. According to this known solution, a combustion chamber is surrounded by a water jacket which is integrated into the circuit of a heating medium in the central heating. A jet burner in the form of a sleeve surrounded by a water jacket projects into the combustion chamber. The water jacket around the combustion nozzle can be made in the form of a spiral pipe which tapers towards the burner outlet. The pipe is fed by fresh water which is heating medium, and from the other side it is connected to the water jacket surrounding the combustion chamber of the boiler.

Different known solution is disclosed in the patent specification of international application No. WO 99/57490. This known solution proposes a boiler with improved thermal efficiency and less air pollution. The boiler comprises a casing which is at the same time a water chamber being a heat exchanger, and a number of water pipes in an exhaust gas flow channel. The heat generated by the combustion of solid fuels is supplied to the channel area of the boiler, where the exchange of heat with a heating medium takes place. The fuel contained in a tank is supplied by gravity to a grate, under which an outlet of an air forcing fan is arranged. One part of the heating gas channel is routed up, further the heating gas channel is routed down and, finally, the last section of the heating gas channel is routed up. Inside the heating gas channel there are smoke tubes in the form of tubes with a heating medium to be heated up.

In the next solution known from patent description DE 3239267 in central heating boiler the primary and secondary air enters the boiler at the level of the fire bed. The primary air guidance takes place horizontally through the fire bed. The secondary air guidance takes place through a preheating vertical shaft do the upper region of the filing shaft. Then downwards through the rear region of the fire bed to the inlet opening and through the stone nozzle to the post combustion chamber. This document discloses: a central heating boiler, comprising a body in the form of walls containing a water chamber, where in the front wall of the boiler there is a fuel charging opening and in the bottom part of the front wall there is an opening (5) with a bottom door, above a grate, whereas below the grate there is an opening with an ash pit door, wherein in the upper part of the boiler there is a flue gas outlet conduit, whereas inside of a furnace chamber there are labyrinth partitions of exhaust gas flow, wherein said labyrinth partitions constitute a heat exchanger, wherein inside the furnace chamber of the boiler there is a horizontal partition connected with the vertical front wall of the boiler, and a vertical partition, wherein the vertical partition is situated in a plane parallel to the vertical rear wall of the boiler, whereas between the vertical partition, and the vertical rear wall of the boiler there is a vertical flue gas after-burning chamber, whereas a flue gas inlet to the vertical after burning chamber is arranged within a bottom horizontal edge of the vertical partition, in the zone adjacent to the boiler grate, wherein the vertical partition is a layer of material constituting a heat transfer medium and accumulator. Next solution known from american patent specification No. US 4,162,686 discloses a boiler adapted to burn multiple fuels and reduce harmful flue gas emissions. In this known solution the boiler casing contains a water jacket and at least one fan blowing air under a furnace, over a furnace, and to the central zone of a combustion chamber. Over the combustion chamber there is a waste gas channel system through the interior of the water jacket chamber.

Another known solution of a heating boiler is disclosed in Polish patent specification No. 191949. A heating boiler according to this known solution comprises a body, a charging passage, an ash pit passage, a grate, a flue gas chimney outlet and a washout hole. A water jacket constitutes a space between double walls of the body, along with hollow connectors between the walls. The hollow connectors of the walls constitute alternating horizontal partitions forming a labyrinth smoke flue. The smoke flue is routed at the top to the chimney outlet. The chimney outlet is arranged in the upper part of the body wall. Said connectors have the shape of a pipe, with a diameter equal to the distance between the double walls of the body. In the upper part of the body wall of the boiler a hot water discharging connector is arranged.

The purpose of the invention is to develop a new structure of a heating boiler with increased thermal efficiency and significantly reduced emissions of harmful components in flue gases emitted by the boiler to the atmosphere. In particular, the aim is to develop a structure of a boiler with the afterburning effect of non-combusted volatile gases emitted in a furnace chamber from a number of types of solid fuels takes place.

According to the invention, a heating boiler comprises structural and functional elements shaped so as to form working spaces connected to one another and arranged in such a manner so that the burning solid fuel produces gas and smoke, that enriched with the air sucked owing to the vacuum created in the furnace space, could pass through the heat of the combusting solid fuel again and combust in an additional after-combustion chamber in a high temperature which is maintained there. All processes take place automatically in the heating boiler according to the invention, but in other embodiments the heating boiler can be equipped with elements that control and support its operation.

According to the invention, a central heating boiler comprises a body in the form of walls with water chambers, where in the front wall of the boiler there is a fuel charging opening and in the bottom part of the front wall there is an opening with a bottom door, above a grate. Below the grate there is an opening with an ash pit door, wherein in the upper part of the boiler there is a flue gas outlet conduit. Inside the upper part of a furnace chamber there are labyrinth partitions of exhaust gas flow. Said labyrinth partitions constitute a heat exchanger. In the front wall of the boiler there is a forced air inlet to the furnace chamber.

According to the invention, the central heating boiler is characterised in that inside the furnace chamber of the boiler there is at least one horizontal partition connected with a vertical wall of the boiler, and at least one vertical partition, wherein the labyrinth partitions, forming a flue gas outlet passage are arranged above the horizontal partition, whereas the vertical partition is situated in a plane parallel to the vertical wall of the boiler. Between that at least one vertical partition, and the vertical wall of the boiler there is at least one vertical flue gas after-combustion chamber. A flue gas inlet to said vertical after-combustion chamber is arranged within a bottom horizontal edge of the vertical partition, in the zone adjacent to the boiler grate.

According to the invention, the vertical partition is preferably a layer of material constituting a heat transfer medium and accumulator.

The solution according to the invention provides that the vertical partition can be a plate of a mixture of cement and aggregate, resistant to a temperature from 1500°C to 2000°C.

In the structure of the boiler according to the invention, between the free horizontal edge of the horizontal partition, and the upper horizontal edge of the vertical partition, preferably a passage connecting the furnace zone with the labyrinth outlet passage zone is arranged, wherein the connecting passage is equipped with a locking damper.

The labyrinth partitions constitute a heat exchanger in the form of arranged flat, parallel to one another, sets of tubes connecting water chambers in the opposite walls of the boiler. Water which is a heating medium in the central heating system flows inside the tubes. The flat sets of tubes are arranged parallel to one another in horizontal planes, but a different arrangement of the parallel sets of tubes of a heat exchanger is not excluded.

According to the invention, the adjacent labyrinth partitions connecting the water chambers of the opposite vertical side walls of the boiler, alternately adjoin the front wall of the boiler and the rear wall of the boiler. One labyrinth partition adjoins from the inside the front wall of the boiler and does not adjoin the rear wall of the boiler, whereas the adjacent labyrinth partition adjoins the rear wall of the boiler and does not adjoin the front wall of the boiler. In places where the partitions do not adjoin the front wall or the rear wall of the boiler, passages are formed through which hot flue gases flow in the labyrinth passage of the described heat exchanger. This arrangement can be modified so that the tubes in the labyrinth partitions may connect the water chambers in the front wall and in the rear wall of the boiler, and then they will form a labyrinth for the flow of flue gas between the side walls of the boiler.

The solution according to the invention provides that the boiler is equipped with an air inlet in the upper part of the furnace chamber. The air inlet to the furnace chamber is equipped with a control damper and is arranged below the horizontal partition. This means that air containing oxygen is forced in this solution from the top to the furnace.

A solid fuel charging door of the boiler, in the solution according to the invention, is below the forced air inlet.

According to the invention, a new structure of a central heating boiler with increased thermal efficiency and significantly reduced emissions of harmful components in flue gases emitted by the boiler to the atmosphere is developed. In the solution according to the invention, in the phase after lighting the boiler, a reversal of the direction of flue gas flow is proposed. In the prior art solutions, flue gas flow was from the bottom to the top, resulting in the lack of oxygen content in exhaust gases from above a furnace which is necessary for the after-combustion of combustible gases released in the combustion process of solid fuel. In the prior art designs this resulted in the emission of non-combusted harmful gases and not fully combusted particulates.

In the solution according to the invention, the direction of gas flow inside the boiler is reversed in such a way that gases, including the air feeding the combustion process, flows from the top through the furnace, through the bottom under the bottom edge of the vertical partition 19 to the vertical flue gas after-combustion chamber 20. This makes that releasing upwards in the furnace zone flue gases containing flammable components supplemented with oxygen from the air needed for combustion, supplied by the air inlet, are directed to the furnace and there, and in the after-combustion chamber, adjacent to the vertical partition heated to approx. 1500°C, they undergo after-combustion releasing an additional calorific value and being self-cleaned by the described process of after-combustion of combustible gas residues.

The object of the invention is shown in the embodiments in the accompanying drawings in which the individual figures show:
- Fig. 1: - a schematic section of the boiler in a vertical plane, perpendicular to the plane of the front wall in a working phase.
- Fig. 2: - a schematic section of a second embodiment of the boiler in a start-up phase.
- Fig. 3: - a schematic section of the boiler according to Fig. 2 in a working phase.

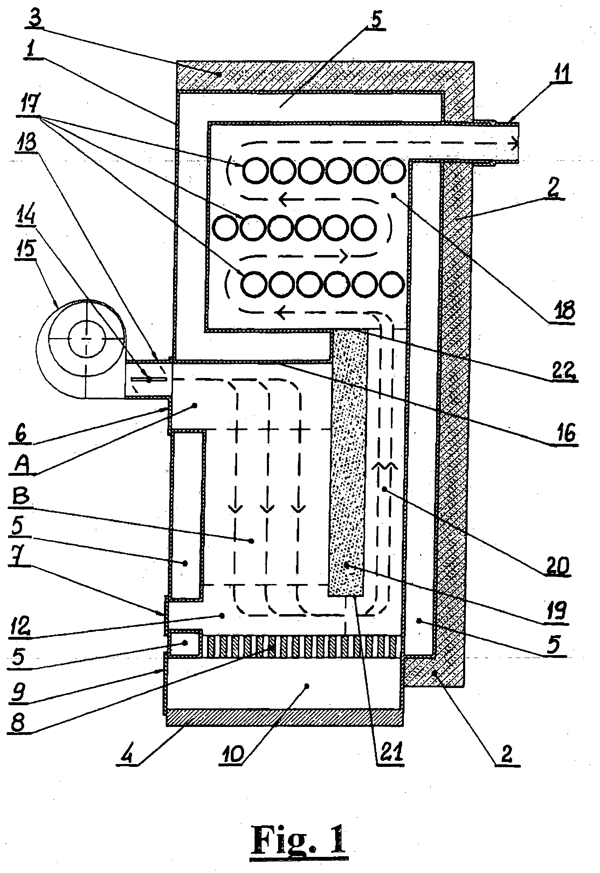

The accompanying drawings Fig. 1, Fig. 2 and Fig. 3 show a section of the boiler in a vertical plane, perpendicular to the front wall of the boiler. In the drawings arrows are used to indicate the directions of gas flow, namely the flow of gas mixture with air in zones A and B towards the furnace and the flow of flue gas through the after-combustion chamber, to the conduit.

As shown in the accompanying drawings from Fig. 1 to Fig. 3, a central heating boiler comprises a body in the form of a front wall 1, a rear wall 2, an upper wall 3, and a base 4 with a water circulation chamber 5. The water chamber 5 is a series of flow-interconnected chambers in the walls 1,2,3, and in the boiler side walls not shown in the drawings. In the front wall 1 of the boiler there is a fuel charging opening 6 and in the bottom part of the front wall 1 there is an opening with a bottom door 7, above a grate 8. Below the grate 8 there is an opening with an ash pit 10 door 9, wherein in the upper part of the boiler there is a flue gas outlet conduit 11. Inside the upper part of a furnace chamber 12 there are labyrinth partitions of exhaust gas flow. Said labyrinth partitions constitute a heat exchanger. In the front wall 1 of the boiler there is an air inlet 13 to the furnace chamber 12. In this embodiment, the inlet 13 contains an air damper 13 inside. The forcing of air is supported in this embodiment by a centrifugal fan 15 attached to the front wall 1 of the boiler.

Inside the furnace chamber 12 of the boiler there is a horizontal partition 16 connected with the front wall 1 of the boiler. In this embodiment, the horizontal partition 16 comprises an element of the water chamber 5 inside, flow-interconnected with the water circulation system in the boiler walls. In this embodiment, a heat exchanger is arranged above the horizontal partition 16. The heat exchanger has the form of a series of labyrinth partitions 17 forming a flue gas outlet passage above the horizontal partition 16. In this embodiment, each of the labyrinth partitions 17 has the form of a set of six interconnected tubes arranged in one plane. The tubes are connected with those parts of the water chamber 5 that are in the boiler side walls not shown in the drawings. Therefore, the tubes in the labyrinth partitions 17 are working elements of the heat exchanger. As shown in the accompanying drawings, the heat exchanger contains three labyrinth partitions 17. These flat sets of tubes forming labyrinth partitions are arranged parallel to one another in horizontal planes, but other embodiments do not exclude a different arrangement of these parallel sets of tubes of the heat exchanger, for example, an arrangement of vertical labyrinth partitions 17 and their different quantity.

According to the invention, the adjacent labyrinth partitions connecting parts of the water chamber 5 of the opposite vertical side walls of the boiler, alternately adjoin the front wall 1 of the boiler and the rear wall 2 of the boiler. One labyrinth partition 17 adjoins the rear wall 2 of the boiler and does not adjoin the front wall 1 of the boiler, whereas the adjacent labyrinth partition 17 adjoins the rear wall 2 of the boiler and does not adjoin the front wall 1 of the boiler. In places where the partitions 17 do not adjoin the front wall 1 or the rear wall 2 of the boiler, a labyrinth passage 18 is formed through which hot flue gases flow in the described heat exchanger. This arrangement can be modified in other embodiments so that the tubes in the labyrinth partitions 17 may connect the water chambers in the front wall 1 and in the rear wall 2 of the boiler, and then they will form a labyrinth for the flow of flue gas between the boiler side walls not shown in the drawings.

The boiler according to the invention contains a vertical partition 19 inside. Said vertical partition 19 is situated in a plane parallel to the vertical rear wall 2 of the boiler. The accompanying drawings show one vertical partition 19, but there can be more such partitions in other embodiments and they can be situated by other vertical walls of the boiler.

In this embodiment, between the vertical partition 19, and the rear wall 2 of the boiler there is a vertical flue gas afterburning chamber 20. A flue gas inlet to said afterburning chamber 20 is arranged within a bottom horizontal edge 21 of the vertical partition 19, in the zone adjacent to the boiler grate 8. The vertical partition 19 is a layer of material constituting a heat transfer medium and accumulator. In the described embodiment, the vertical partition 19 is a plate of a mixture of cement and aggregate, resistant to a temperature of 2000°C.

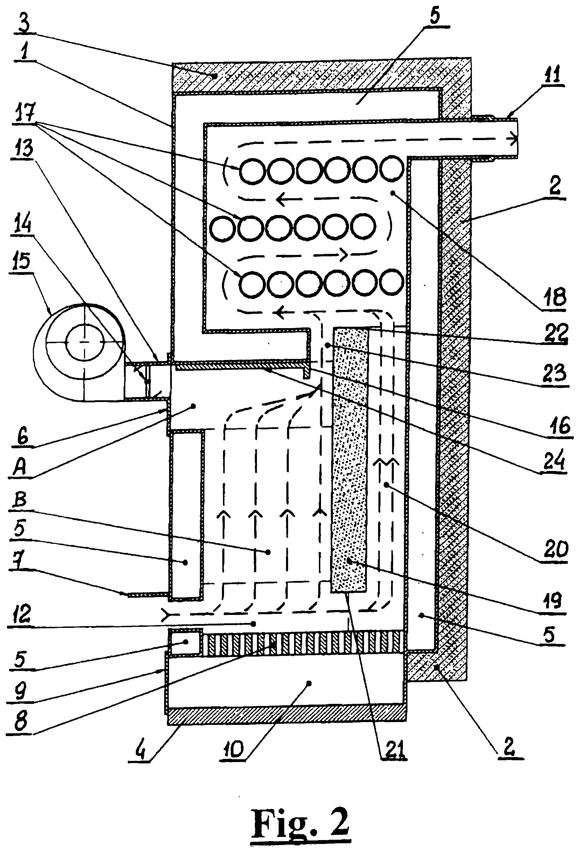

In another embodiment, shown in Fig. 2, between the free horizontal edge 21 of the horizontal partition 16, and the upper horizontal edge 22 of the vertical partition 19, a passage 23 connecting the zones A,B of the chamber above the furnace 12, with the labyrinth outlet passage 18 zone is arranged, wherein the connecting passage 23 is equipped with a locking damper 24.

A solid fuel charging opening door 6 of the boiler, in the solution according to the invention, is below the forced air inlet 13.

The process of lighting the central heating boiler according to the invention starts from delivering solid fuel inside, and then pulling the damper 24 opening the passage 23 back, which enables direct gas flow from the furnace 12 zone to the labyrinth passage 18 zone. At the same time, the ash pit door 9 is open slightly in the position shown in Fig. 2. With this position of the damper 24 and the ash pit 10 door 9, the space of the zones A and B above the furnace 12 which is a combustion chamber of the boiler intakes the necessary air for the combustion of the solid fuel from the bottom, through the ash pit 10 door 9. This is shown in Fig. 2. The solid fuel in the furnace area starts burning producing flue gases which pass through the space of the zones A and B, above the furnace 12 and through the space in the afterburning chamber 20 to the labyrinth heat exchanger and escape through the flue gas outlet conduit 11, as shown in said Fig. 2. In the process of lighting the boiler, the heat produced during the combustion of solid fuel in the space of the zones A, B of the furnace chamber 12 and above the chamber, heats the vertical partition 19.

The vertical partition 19 in this embodiment is made of concrete and aggregate resistant to temperatures of up to 1500° C, which also has properties of a heat absorber. In other embodiments the heating boiler can be equipped with the vertical partition 19 made of other materials having similar thermal and strength properties. This particular feature of the partition 19 makes that new batches of solid fuel which is inside and which is added to the space of the furnace chamber 12 are heated up.

A characteristic feature of the boiler according to the invention is the creation of the possibility of using the heated vertical partition 19 to heat solid fuel and to initially degas it. Reaching the solid fuel temperature, at which the degassing process begins, for example about 1000°C, and the simultaneous closing of the ash pit 10 door 9 and the damper 24 cutting off the possibility of gas flow through the passage 23, ends the lighting stage of the boiler according to the invention.

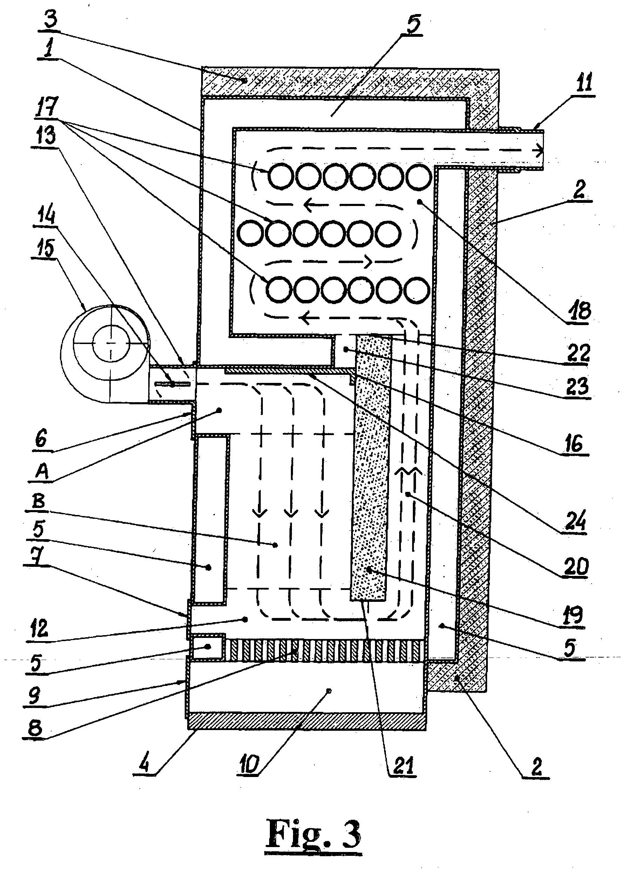

Opening of the air damper 14 in the air inlet 13 results in air intake with oxygen to the furnace chamber 12 zone and changes the direction of gas flow inside the boiler and begins an optimum combustion process. An optimum combustion process shown in Fig. 3 is possible due to the appropriate direction of gas flow from the air inlet 13 through the zones A and B, above and within the furnace 12, through the vertical afterburning chamber 20 and through the labyrinth passage 18, to the flue gas outlet conduit 11. During such a flow of gases inside the boiler, solid fuel heated by the vertical partition 19 is degassed producing gases which enriched by the air sucked by the air inlet 13, begin to combust in the space of the zones A and B, above the furnace 12, and undergo after-combustion at a temperature of about 1400°C, in the vertical afterburning chamber 20. In the further part of the process, the gases subjected to after-combustion at a high temperature, and thus free of toxic compounds, passing through the area of a heat exchanger, in which the main, labyrinth heat exchanger with the labyrinth partitions 17 is arranged, heat the working medium and escape from the heating boiler through the flue gas outlet conduit 11. The working medium is also heated over the entire surface of the water jacket 5 in the flow-interconnected water chambers of the boiler, in contact with the heating boiler working space.

After-combustion of gases takes place at a high temperature within the furnace 12 due to a reversal of the direction of air flow inside the boiler. The vertical partition 19 heats up and transfers heat to the charging chamber within the furnace 12, causing drying and heating of the fuel resulting in the creation of gases that are oxygenated with air from the top. The gas from the heated fuel is immediately oxygenated in the zones A and B of the chamber above the furnace 12 and is sucked down to the furnace 12 heat and finally undergoes after-combustion in the dry afterburning chamber 20 giving additional heat to the heat exchanger. The gas from the fuel, subjected to after-combustion in the afterburning chamber 20 loses on this way most harmful substances in the form of combustible gases, carbon dioxide and smoke.

### List of designations in the figures

- 1.: Front wall.
- 2.: Rear wall.
- 3.: Upper wall.
- 4.: Base.
- 5.: Water chamber.
- 6.: Fuel charging opening door.
- 7.: Bottom door.
- 8.: Grate.
- 9.: Ash pit door.
- 10.: Ash pit.
- 11.: Flue gas outlet conduit.
- 12.: Furnace chamber.
- 13.: Forced air inlet.
- 14.: Air damper.
- 15.: Centrifugal fan.
- 16.: Horizontal partition.
- 17.: Labyrinth partition.
- 18.: Labyrinth passage.
- 19.: Vertical partition.
- 20.: Afterburning chamber.
- 21.: Bottom horizontal edge of the vertical partition.
- 22.: Upper horizontal edge of the vertical partition.
- 23.: Connecting passage.
- 24.: Connecting passage damper.
- A.: Upper zone of the furnace chamber.
- B.: Bottom zone of the furnace chamber.

## Claims

1. A central heating boiler, comprising a body in the form of walls containing flow-interconnected water chambers, where in the front wall (1) of the boiler there is a fuel charging opening (6) and in the bottom part of the front wall (1) there is an opening with a bottom door (7), above a grate (8), whereas below the grate (8) there is an opening with an ash pit door (9), wherein in the upper part of the boiler there is a flue gas outlet conduit (11), whereas in the upper part of the inside of a furnace chamber (12) there are labyrinth partitions (17) of exhaust gas flow, where each of the labyrinth partition (17) has the form of a set of interconnected tubes arranged in one plane, wherein said labyrinth partitions (17) constitute a heat exchanger, wherein inside the furnace chamber (12) of the boiler there is at least one horizontal partition (16) connected with the vertical front wall (1) of the boiler, and at least one vertical partition (19), wherein the vertical partition (19) is situated in a plane parallel to the vertical rear wall (2) of the boiler, whereas between the vertical partition (19), and the vertical rear wall (2) of the boiler there is at least one vertical flue gas afterburning chamber (20), whereas a flue gas inlet to the vertical afterburning chamber (20) is arranged within a bottom horizontal edge of the vertical partition (20), in the zone adjacent to the boiler grate (8), whereas the vertical partition (19) is situated in a plane parallel to the vertical rear wall (2) of the boiler, whereas the vertical partition (19) is a layer of material constituting a heat transfer medium and accumulator, whereas in the vertical front wall (1) of the boiler there is an air inlet (13) to the upper zone (A) of the furnace chamber (12).

2. The central heating boiler, according to claim 1, **characterised in that** the vertical partition (19) is a plate of a mixture of cement and aggregate, resistant to a temperature from 1500°C to 2000°C.

3. The central heating boiler, according to claim 1 or 2, **characterised in that** the horizontal labyrinth partitions (17) forming a flue gas outlet passage (18) are arranged above the horizontal partition (16), where between the free horizontal edge of the horizontal partition (16), and the upper horizontal edge (22) of the vertical partition (19), a passage (23) connecting the zones (A,B) above the furnace (12) with the flue gas outlet passage (18) zone is arranged, wherein the connecting passage (23) is equipped with a locking damper (24)

4. The central heating boiler, according to claim 3, **characterised in that** the horizontal labyrinth partitions (17) constitute arranged, parallel to one another, sets of tubes connecting water chambers (5) in the opposite walls of the boiler.

5. The central heating boiler, according to claim 4, **characterised in that** the adjacent labyrinth partitions (17) alternately adjoin the front wall (1) of the boiler and the rear wall (2) of the boiler.

6. The central heating boiler, according to claim 1, **characterised in that** the air inlet (13) to the zone (A) of the chamber above the furnace (12) equipped with a control damper (14) is arranged below the horizontal partition (16).

7. The central heating boiler, according to claim 1, **characterised in that** a solid fuel charging door (6) of the boiler is below the air inlet (13) to the zones (A,B) of the chamber above the furnace (12).

## Patentansprüche

1. Zentralheizungskessel, umfassend einen Grundkörper, dessen Wände miteinander durchflussmäßig verbundene Wasserkammern umgeben, wobei in einer Stirnwand (1) des Kessels eine Beschickungsöffnung (6) für Brennstoff und in einem unteren Teil der Stirnwand (1) eine Öffnung mit einer unteren Tür (7) oberhalb eines Rosts (8) angeordnet ist, wobei unterhalb des Rosts (8) eine Öffnung mit einer Tür eines Aschenkastens (9) angeordnet ist, wobei in einem oberen Kesselteil sich ein Rauchabzug (11) für Verbrennungsgase befindet, wobei im Inneren des oberen Kesselteils Labyrinth-Sperren (17) der Abgasströmung befindlich sind, wobei die besagten Labyrinth-Sperren (17) einen Wärmeaustauscher darstellen, wobei im Inneren einer Kammer einer Kesselfeuerung (12) sich mindestens eine horizontale Sperre (16) befindet, welche mit der Stirnwand (1) des Kessels verbunden ist, sowie mindestens eine vertikale Sperre (19), wobei die vertikale Sperre (19) in einer zu einer vertikalen Rückwand (2) des Kessels parallelen Ebene angeordnet ist, wobei zwischen der vertikalen Sperre (19) und der vertikalen Kesselrückwand (2) sich mindestens eine vertikale Nachverbrennungskammer (20) für die Verbrennungsgase befindet, wobei der Eintritt der in die vertikale Nachverbrennungskammer (20) einströmenden Verbrennungsgase sich im Bereich einer horizontalen Unterkante (21) der vertikalen Sperre (19), in einer mit dem Kesselrost (8) benachbarten Zone befindet, wobei die vertikale Sperre (19) in einer zur vertikalen Kesselrückwand (2) parallelen Ebene angeordnet ist, wobei die vertikale Sperre (19) eine Werkstoffschicht eines Wärmeträgers und -speichers ist, wobei in der vertikalen Kesselstirnwand (1) in einer oberen Zone (A) der Kammer der Feuerung (12) ein Lufteintritt in die Kammer der Feuerung (12) angeordnet ist.

2. Zentralheizungskessel nach Anspruch 1, **dadurch gekennzeichnet, dass** die vertikale Sperre (19) eine Platte ist, die aus einer Mischung von Zement und Zuschlagstoff besteht, wobei die Mischung gegen Temperaturen im Bereich von 1500°C bis 2000°C beständig ist.

3. Zentralheizungskessel nach Anspruch 1 oder 2, **dadurch gekennzeichnet, dass** die horizontalen Labyrinth-Sperren (17), welche einen Auslasskanal (18) der Verbrennungsgase bilden, sich oberhalb der horizontalen Sperre (16) befinden, wobei zwischen einer freien, horizontalen Kante der horizontalen Sperre (16) und einer horizontalen Oberkante (22) der vertikalen Sperre (19) ein Verbindungskanal (23) angeordnet ist, welcher die Zonen (A, B) oberhalb der Feuerung (12) mit der Zone des Auslasskanals (18) der Verbrennungsgase verbindet, wobei der Verbindungskanal (23) mit einem Absperrschieber (24) ausgestattet ist.

4. Zentralheizungskessel nach Anspruch 3, **dadurch gekennzeichnet, dass** die horizontalen Labyrinth-Sperren (17) parallel zueinander angeordnete Rohrbündel bilden, welche die Wasserkammern (5) in den gegenüberliegenden Seitenwänden des Kessels miteinander verbinden.

5. Zentralheizungskessel nach Anspruch 4, **dadurch gekennzeichnet, dass** die benachbarten Labyrinth-Sperren (17) abwechselnd an der Kesselstirnwand (1) und an der Kesselrückwand (2) anliegen.

6. Zentralheizungskessel nach Anspruch 1, **dadurch gekennzeichnet, dass** der mit einem Drosselregler (14) ausgestattete Lufteintritt (13) in die Zone (A) der oberhalb der Feuerung (12) liegenden Kammer unterhalb der horizontalen Sperre (16) angeordnet ist.

7. Zentralheizungskessel nach Anspruch 1, **dadurch gekennzeichnet, dass** die Beschickungstür (6) für die Zuführung des festen Brennstoffs in den Kessel unterhalb des Lufteintritts (13) in die Zonen (A,B) der oberhalb der Feuerung (12) liegenden Kammer angeordnet ist.

## Revendications

1. Chaudière de chauffage central, intégrant un corps sous forme des parois incluant de chambres hydrauliques raccordées de façon à permettre la circulation de l'eau où, dans la Paros frontale (1) de la chaudière un trou de chargement du combustible se trouve (6) et dans la partie inférieure de la paroi frontale (1) un trou muni de la porte inférieure se trouve (7), au-dessus de la grille (8), et au-dessous de la grille (8) un trou muni de la porte de cendrier se trouve (9), et dans la partie supérieure de la chaudière un carneau de sortie se trouve (11) pour les gaz de combustion et à l'intérieur de la partie supérieure de la chaudière des cloisons à labirynthe se trouvent (17) pour le passage des gaz de combustion et les cloisons à labirynthe mentionnées ci-dessus (17) constituent un échangeur de la chaleur et à l'intérieur de la chambre du foyer (12) de la chaudière au moins une cloison horizontale se trouve, (16) reliée à la paroi frontale (1) de la chaudière, et au moins une cloison vertical e(19), et cette cloison verticale (19) est situé sur le plan parallèle à la paroi verticale arrière (2) de la chaudière, et entre cette cloison verticale (19), et la paroi verticale arrière de la chaudière (2) se trouve au moins une chambre verticale (20) post-brûleur, et l'entrée des gaz de combustion à la chambre verticale de post-combustion (20) se trouve dans la zone du bord horizontal inférieur (21) de la cloison verticale(19), dans la zone voisine à la grille (8) de la chaudière, et la cloison verticale (19) est située dans le plan parallèle à la paroi verticale arrière (2) de la chaudière, où la cloison verticale (19) constitue une couche de la matière qui est transmetteur et accumutaleur de la chaleur et, dans la paroi verticale frontale (1) de la chaudière, dans la zone supérieure (A) de la chambre du foyer (12) l'entrée de l'air à cette chambre du foyer (12) se trouve.

2. Chaudière de chauffage central selon la revendication 1, **caractérisée en ce que** la cloison verticale (19) constitue une plaque en mélange de ciment et d'agrégat résistant à la températyure de 1500°C à 2000°C.

3. Chaudière de chauffage central selon la revendication 1 ou 2, **caractérisée en ce que** les cloisons horizontales à labirynthe (17), qui constituent la conduit de sortie (18) des gaz de combustion se trouvent au-dessus de la cloison horizontale (16) et entre le bord horizontal libre de la cloison horizontale (16), et bord horizontal supérieur (22) de la cloison verticale (19) se trouve un conduit reliant (23) les zones (A,B) au-dessus du foyer (12) avec la zone du conduit de sortie (18) des gaz de combustion, et ce conduit de communication (23) est muni d'un clapet de fermeture (24).

4. Chaudière de chauffage central selon la revendication 3, **caractérisée en ce que** les cloisons horizontales à labirynthe (17) constituent les gropues parallèles de tuyaux reliant les chambres (5) à eau dans les parois latérales opposées de la chaudière.

5. Chaudière de chauffage central selon la revendication 4, **caractérisée en ce que** les cloisons à labirynthe voisines (17) adhèrent alternement à la paroi frontale (1) de la chaudière i et à la paroi arrière (2) de la chaudière.

6. Chaudière de chauffage central selon la revendication 1, **caractérisée en ce que** est munie en un étrangleur de réglage (14) entrée (13) de l'air aux zones (A,B) de la chambre au-dessus du foyer (12) se trouve au-dessous de la paroi horizontale (16).

7. Chaudière de chauffage central selon la revendication n°1, **caractérisée en ce que** la porte (6) de chargement du combustible solide dans la chaudière se trouve au-dessous de l'entrée (13) de l'air aux xones (A,B) de la chambre au-dessus du foyer (12).
